# EUROPEAN PATENT APPLICATION

(11) **EP 4 415 424 A1**
(43) Date of publication of application: **14.08.2024**
(21) Application number: 21959737.4
(22) Date of filing: 09.10.2021
(51) Int. Cl.: H04W 36/00

(54) **INFORMATION REPORTING METHOD, INFORMATION REPORTING APPARATUS AND STORAGE MEDIUM**

(71) Applicant: Beijing Xiaomi Mobile Software Co., Ltd., Beijing 100085 (CN)
(72) Inventor: HONG, Wei, Beijing 100085 (CN)
(74) Representative: Kudlek, Franz Thomas
(86) International application number: PCT/CN2021/122917
(87) International publication number: WO 2023/056647

(57) **Abstract**

The present disclosure provides an information reporting method, an information reporting apparatus, and a storage medium. The information reporting method includes: receiving paging cause capability information transmitted by at least one first base station, where the paging cause capability information is at least configured for indicating whether the at least one first base station supports paging cause capability; determining, at least based on the paging cause capability information, a target base station supporting the paging cause capability from the at least one first base station; and reporting base station information of the target base station to a second base station accessed by the terminal. The present disclosure can realize the purpose of interacting the respective supported paging cause capabilities among base stations by the information reporting from the terminal, such that the usability of the paging cause mechanism is improved.

## Description

### TECHNICAL FIELD

The present disclosure relates to the field of communications, and in particular to information reporting methods, information reporting apparatuses, and storage mediums.

### BACKGROUND

With the development of wireless communication technology, there are more and more multi-card terminals in the market. At present, processing methods for the multi-card terminals are implemented mainly based on various terminal manufacturers, which leads to many different terminal behaviors and processing methods, for example, dual-card single standby, dual-card dual standby single pass, dual-card dual standby dual pass, etc., and may lead to some problems. For example, when the multi-card terminal is communicating with a first system, it is necessary to switch the connection to a second system from time to time for operation, such as monitoring paging, measuring and reading system messages. However, this may affect the performance of the first system. If these operations are not performed on the second system, e.g., not monitoring paging, it may cause the service of the second system to be unable to be established. For some operations, the multi-card terminal needs to release a radio resource control (RRC) connection with the first system, for example, operations that take a long time, and for some operations, the multi-card terminal does not need to release the RRC connection with the first system, for example, operations that take a short time.

The multi-card terminal needs to know the paging cause of the second system, so as to determine whether to leave the first system, and whether to release the RRC connection with the first system. The base station to notify the paging cause is to be needed, but the interaction of the paging cause capability is not currently supported between the base stations.

### SUMMARY

To solve the problems of the related art, embodiments of the present disclosure provides information reporting methods, information reporting apparatuses, and storage mediums.

According to a first aspect of the embodiments of the present disclosure, there is provided an information reporting method, performed by a terminal, and including:
receiving paging cause capability information transmitted by at least one first base station, where the paging cause capability information is at least configured for indicating whether the at least one first base station supports paging cause capability;
determining, at least based on the paging cause capability information, a target base station supporting the paging cause capability from the at least one first base station; and
reporting base station information of the target base station to a second base station accessed by the terminal.

According to a second aspect of the embodiments of the present disclosure, there is provided an information reporting method, performed by a first base station, and including:
transmitting paging cause capability information to a terminal, where the paging cause capability information is at least configured for indicating whether the first base station supports paging cause capability.

According to a third aspect of the embodiments of the present disclosure, there is provided an information reporting method, performed by a second base station accessed by a terminal, and including:
receiving base station information of a target base station supporting paging cause capability reported by the terminal.

According to a fourth aspect of the embodiments of the present disclosure, there is provided an information reporting apparatus, applied to a terminal, and including:
a first receiving module, configured to receive paging cause capability information transmitted by at least one first base station, where the paging cause capability information is at least configured for indicating whether the at least one first base station supports paging cause capability;
a determination module, configured to determine, at least based on the paging cause capability information, a target base station supporting the paging cause capability from the at least one first base station; and
a reporting module, configured to report, based on the paging cause capability information, the base station information of the target base station to a second base station accessed by the terminal.

According to a fifth aspect of the embodiments of the present disclosure, there is provided an information reporting apparatus, applied to a first base station, and including:
a transmitting module, configured to transmit paging cause capability information to a terminal, where the paging cause capability information is at least configured for indicating whether the first base station supports paging cause capability.

According to a sixth aspect of the embodiments of the present disclosure, there is provided an information reporting apparatus, applied to a second base station, and including:
a second receiving module, configured to receive base station information of a target base station supporting paging cause capability reported by a terminal.

According to a seventh aspect of embodiments of the present disclosure, there is provided a computer-readable storage medium, storing computer programs thereon, where the computer programs, when executed by a processor, cause the processor to perform the information reporting method according to the first aspect.

According to an eighth aspect of embodiments of the present disclosure, there is provided a computer-readable storage medium, storing computer programs thereon, where the computer programs, when executed by a processor, cause the processor to perform the information reporting method according to the second or third aspect.

According to a ninth aspect of the embodiments of the present disclosure, there is provided an information reporting device including:
a processor; and
a memory storing instructions executable by the processor;
where the instructions, when executed by the processor, cause the processor to perform the information reporting method according to the first aspect.

According to a tenth aspect of the embodiments of the present disclosure, there is provided an information reporting device including:
a processor; and
a memory storing instructions executable by the processor;
where the instructions, when executed by the processor, cause the processor to perform the information reporting method according to any one of the second and third aspects.

The technical solutions provided by an example of the present disclosure may include the following beneficial effects.

In the embodiments the present disclosure, the terminal can receive the paging cause capability information transmitted by at least one first base station, and the paging cause capability information at least indicates whether the at least one first base station supports the paging cause capability. Furthermore, the terminal can determine the target base station that supports the paging cause capability from the at least one first base station based on the paging cause capability information, and report the base station information of the target base station to the accessed second base station. The present disclosure can realize the purpose of interacting the respective supported paging cause capabilities among base stations by the information reporting from the terminal, especially in the absence of interfaces among base stations, and realize the purpose of interacting the respective supported paging cause capabilities, such that the usability of the paging cause mechanism is improved.

It is to be understood that the above general descriptions and the below detailed descriptions are merely exemplary and explanatory, and are not intended to limit the present disclosure.

### BRIEF DESCRIPTION OF THE DRAWINGS

The accompanying drawings herein, which are incorporated in and constitute a part of the present description, illustrate examples consistent with the present disclosure and serve to explain the principles of the present disclosure together with the description.
FIG. 1 is a flowchart illustrating an information reporting method according to an embodiment of the present disclosure.
FIG. 2 is a flowchart illustrating an information reporting method according to another embodiment of the present disclosure.
FIG. 3A is a flowchart illustrating an information reporting method according to yet another embodiment of the present disclosure.
FIG. 3B is a flowchart illustrating an information reporting method according to still another embodiment of the present disclosure.
FIG. 4 is a flowchart illustrating an information reporting method according to still another embodiment of the present disclosure.
FIG. 5 is a flowchart illustrating an information reporting method according to still another embodiment of the present disclosure.
FIG. 6 is a flowchart illustrating an information reporting method according to still another embodiment of the present disclosure.
FIG. 7 is a flowchart illustrating an information reporting method according to still another embodiment of the present disclosure.
FIG. 8 is a flowchart illustrating an information reporting method according to still another embodiment of the present disclosure.
FIG. 9 is a flowchart illustrating an information reporting method according to still another embodiment of the present disclosure.
FIG. 10 is a flowchart illustrating an information reporting method according to still another embodiment of the present disclosure.
FIG. 11 is a flowchart illustrating an information reporting method according to still another embodiment of the present disclosure.
FIG. 12 is a flowchart illustrating an information reporting method according to still another embodiment of the present disclosure.
FIG. 13 is a flowchart illustrating an information reporting method according to still another embodiment of the present disclosure.
FIG. 14 is a flowchart illustrating an information reporting method according to still another embodiment of the present disclosure.
FIG. 15 is a flowchart illustrating an information reporting method according to still another embodiment of the present disclosure.
FIG. 16 is a flowchart illustrating an information reporting method according to still another embodiment of the present disclosure.
FIG. 17 is a flowchart illustrating an information reporting method according to still another embodiment of the present disclosure.
FIG. 18 is a flowchart illustrating an information reporting method according to still another embodiment of the present disclosure.
FIG. 19 is a flowchart illustrating an information reporting method according to still another embodiment of the present disclosure.
FIG. 20 is a flowchart illustrating an information reporting method according to still another embodiment of the present disclosure.
FIG. 21 is a flowchart illustrating an information reporting method according to still another embodiment of the present disclosure.
FIG. 22 is a block diagram illustrating an information reporting apparatus according to an embodiment of the present disclosure.
FIG. 23 is a block diagram illustrating an information reporting apparatus according to another embodiment of the present disclosure.
FIG. 24 is a block diagram illustrating an information reporting apparatus according to yet another embodiment of the present disclosure.
FIG. 25 is a structural schematic diagram illustrating an information reporting device according to an embodiment of the present disclosure.
FIG. 26 is a structural schematic diagram illustrating an information reporting device according to another embodiment of the present disclosure.

### DETAILED DESCRIPTION OF THE EMBODIMENTS

Examples will be described in detail herein, with the illustrations thereof represented in the drawings. Where the following description relates to the drawings, unless otherwise indicated, the same numerals in different drawings represent the same or similar elements. Implementations described in the following examples do not represent all implementations consistent with the present disclosure. On the contrary, they are examples of an apparatus and a method consistent with some aspects of the present disclosure described in detail in the appended claims.

The terminology used herein is for the purpose of describing particular embodiments only and is not intended to be limiting of the present disclosure. As used herein, the singular forms "a", "said" and "the" are intended to include the plural forms as well, unless the context clearly indicates otherwise. It will also be understood that as used herein, the term "and/or" is and includes any or all combinations of one or more of the associated listed items.

It will be understood that while terms such as "first", "second", "third", etc. may be used to describe to describe various information, such information should not be limited to these terms. These terms are used only to distinguish the same type of information from each other. For example, without departing from the scope of the present disclosure, a first information may also be referred to as a second information, and similarly, a second information may also be referred to as a first information. Depending on the context, as used herein, the wording "if' may be interpreted as "while ..." or "when ..." or "in response to a determination".

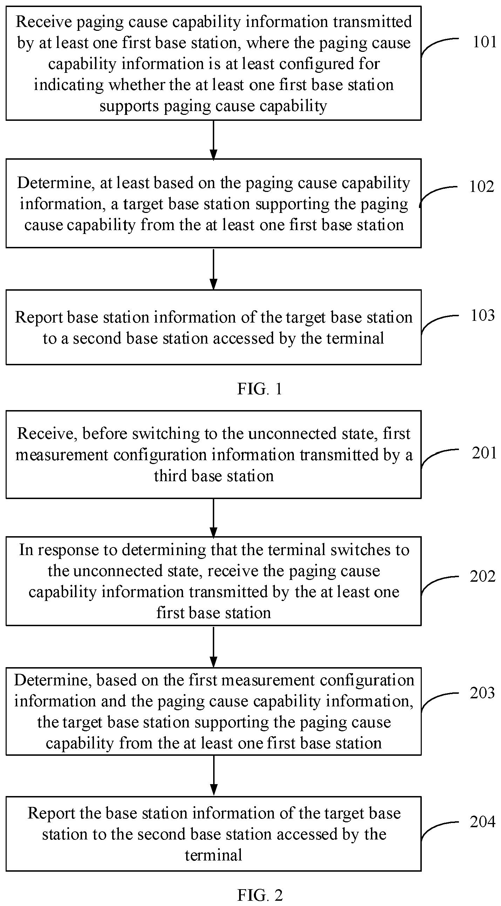

An embodiment of the present disclosure provides an information reporting method, which can be performed by a terminal including, but being not limited to, a terminal supporting one or more subscriber identity module (SIM) cards. FIG. 1 is a flowchart illustrating the information reporting method according to an embodiment of the present disclosure. As shown in FIG. 1, the method can include the following steps 101 to 103.

At step 101, paging cause capability information transmitted by at least one first base station is received, where the paging cause capability information is at least configured for indicating whether the at least one first base station supports paging cause capability;

In the embodiment of the present disclosure, the paging cause capability information can also be configured to indicate the specific paging cause capability supported by the first base station. The paging cause capabilities corresponds to different paging causes including, but being not limited to, the need for the terminal to monitor paging messages, the need for the terminal to measure, the need for the terminal to read system messages, etc., which is not limited by the present disclosure.

At step 102, at least based on the paging cause capability information, a target base station supporting the paging cause capability is determined from the at least one first base station.

In the embodiments of the present disclosure, some base stations support paging causes and some base stations do not, and they transmit their paging cause capabilities to the terminal. The terminal determines the base station that supports the paging cause capability (that is, the target base station) based on the received paging cause capability information.

At step 103, base station information of the target base station is reported to a second base station accessed by the terminal.

In the embodiments of the present disclosure, the second base station is a base station currently accessed by the terminal, and the second base station and the first base station may be different base stations. Based on the received paging cause capability information, the terminal can determine the target base station supporting the paging cause capability among the at least one first base station, and report the base station information of the target base station to the currently accessed second base station, so that the second base station can determine the base station information of the target base station supporting the paging cause capability. The base station information of the target base station includes, but is not limited to, base station identifier information of the target base station.

In the above-mentioned embodiments, the present disclosure can realize the purpose of interacting the respective supported paging cause capabilities among base stations by the information reporting from the terminal, especially in the absence of interfaces among base stations, and realize the purpose of interacting the respective supported paging cause capabilities, such that the usability of the paging cause mechanism is improved.

In some embodiments, the terminal is in an unconnected state, and the unconnected state including, but not limited to, an inactive state, an idle state, etc. Accordingly, the first base station includes at least one of: a base station for a cell on which the terminal camps; or a neighboring base station adjacent to the cell on which the terminal camps.

That is, the terminal can receive the paging cause capability information transmitted by the base station for the camped cell and/or the paging cause capability information transmitted by the neighboring base station of the camped cell. Thereby the base station information of the target base station that supports the paging cause capability can be determined. The base station information of the target base station includes, but is not limited to, base station identifier information of the target base station. Furthermore, the terminal reports the base station information of the target base station to the accessed second base station.

In the above-mentioned embodiment, the base station information of the target base station that supports the paging cause capability can be determined by the terminal in the unconnected state. When the terminal accesses the second base station, the base station information of the target base station is reported to the second base station via the terminal. Therefore, the purpose of interacting the respective supported paging cause capabilities among base stations can be realized by the information reporting from the terminal, especially in the absence of interfaces among base stations, such that the usability of the paging cause mechanism is improved.

In some embodiments, an information reporting method is provided, and the method can be performed by a terminal including, but being not limited to, a terminal supporting one or more SIM cards. FIG. 2 is a flowchart illustrating the information reporting method according to another embodiment of the present disclosure. As shown in FIG. 2, the method can include the following steps 201 to 204.

At step 201, before the terminal switches to the unconnected state, the first measurement configuration information transmitted by the third base station is received.

In the embodiments of the present disclosure, the terminal can receive the first measurement configuration information from the third base station before switching to the unconnected state.

In an embodiment, the third base station includes, but is not limited to, a base station last accessed by the terminal before the terminal switches to the unconnected state. In the embodiments of the present disclosure, if the terminal switches to the inactive state, the third base station is an anchor base station corresponding to the terminal in the inactive state. If the terminal switches to an idle state, the third base station is a service base station last accessed by the terminal in the idle state.

In the embodiments of the present disclosure, the third base station may be the same as or different from the first base station, or the third base station may be the same as or different from the second base station, and the present disclosure is not limited thereto.

In a possible implementation, the first measurement configuration information can configure the terminal to measure and record the base station information of the target base station that supports the paging cause capability after the terminal switches to the unconnected state. The base station information of the target base station includes, but is not limited to, base station identifier information of the target base station.

In another possible implementation, the first measurement configuration information can configure the terminal to measure and record the base station information of the target base station that supports the paging cause capability after the terminal switches to the unconnected state. Also, the first measurement configuration information can configure the terminal to receive the paging cause capability information transmitted by the at least one first base station through first signaling after the terminal switches to the unconnected state. The base station information of the target base station includes, but is not limited to, base station identifier information of the target base station.

In the embodiments of the present disclosure, the first signaling may include at least one of: radio resource control (RRC) release signaling; or RRC reconfiguration signaling, which is not limited by the present disclosure.

The above-mentioned embodiment is only an exemplary explanation. The base station can configure the terminal and transmit the measurement configuration information. The solution of measuring configuration information for determining the base station information of the target base station that supports the paging cause capability after the terminal switches to the unconnected state should fall within the scope of the present disclosure.

At step 202, in response to determining that the terminal switches to the unconnected state, the paging cause capability information transmitted by the at least one first base station is received.

The first base station can be a base station for the cell on which the terminal camps, and/or a neighboring base station adjacent to the cell on which the terminal camps. The paging cause capability information is at least configured for indicating whether the first base station supports the paging cause capability.

At step 203, based on the first measurement configuration information and the paging cause capability information, the target base station supporting the paging cause capability is determined from the at least one first base station.

In the embodiments of the present disclosure, when the terminal determines that it switches to the unconnected state, such as an inactive or idle state, the terminal can determine the target base station that supports the paging cause capability from the at least one first base station based on the previously received first measurement configuration information and the paging cause capability information transmitted by the at least one first base station, and the terminal can record the base station information of the target base station.

At step 204, the base station information of the target base station is reported to a second base station accessed by the terminal.

The base station information of the target base station includes, but is not limited to, the base station identifier information of the target base station.

In the above-mentioned embodiment, the terminal in the unconnected state can measure and record the base station information of the target base station that supports the paging cause capability from the at least one first base station after the terminal switches to the unconnected state based on the first measurement configuration information transmitted by the third base station mentioned, so as to report the base station information of the target base station to the second base station after accessing the second base station. As a result, the purpose of interacting the respective supported paging cause capabilities among base stations can be realized by the information reporting from the terminal, such that the usability of the paging cause mechanism is improved.

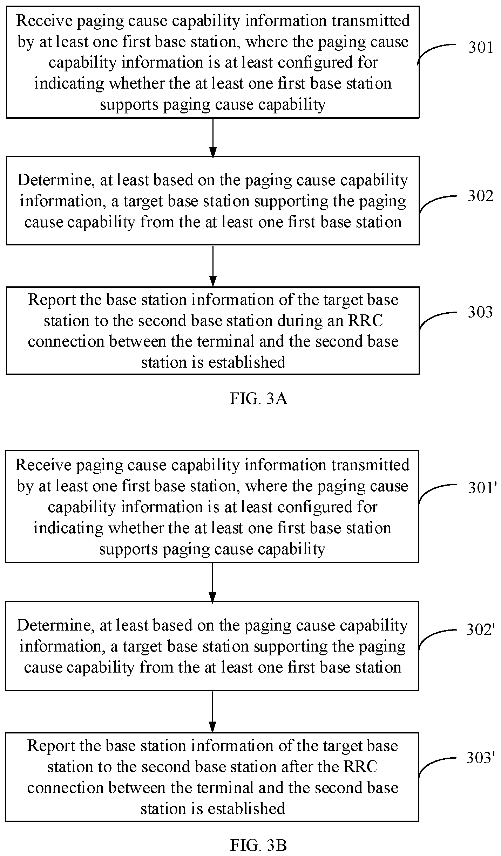

In some embodiments, an information reporting method is provided, and the method can be performed by a terminal including, but being not limited to, a terminal supporting one or more SIM cards. FIG. 3A is a flowchart illustrating the information reporting method according to yet another embodiment of the present disclosure. As shown in FIG. 3A, the method can include the following steps 301 to 303.

At step 301, the paging cause capability information transmitted by at least one first base station is received, where the paging cause capability information is at least configured for indicating whether the at least one first base station supports paging cause capability.

In the embodiments of the present disclosure, the terminal is in the unconnected state, and the first base station includes at least one of: a base station for a cell on which the terminal camps; or a neighboring base station adjacent to the cell on which the terminal camps.

At step 302, at least based on the paging cause capability information, a target base station supporting the paging cause capability is determined from the at least one first base station.

At step 303, the base station information of the target base station is reported to the second base station during an RRC connection between the terminal and the second base station is established.

In the embodiments of the present disclosure, the terminal in the unconnected state can report the base station information of the target base station that supports the paging cause capability recorded by the terminal to the second base station during the process of establishing the RRC connection with the second base station.

In the above-mentioned embodiments, after the terminal in the unconnected state determines the target base station that supports the paging cause capability, the terminal can report the base station information of the target base station supporting the paging cause capability recorded by the terminal to the second base station during the process of establishing the RRC connection with the second base station. Therefore, the purpose of interacting the respective supported paging cause capabilities among base stations can be realized by the information reporting from the terminal, such that the usability of the paging cause mechanism is improved.

In some embodiments, an information reporting method is provided, and the method can be performed by a terminal including, but being not limited to, a terminal supporting one or more SIM cards. FIG. 3B is a flowchart illustrating the information reporting method according to still another embodiment of the present disclosure. As shown in FIG. 3B, the method can include the following steps 301' to 303'.

At step 301', the paging cause capability information transmitted by at least one first base station is received, where the paging cause capability information is at least configured for indicating whether the at least one first base station supports paging cause capability.

In the embodiments of the present disclosure, the terminal is in the unconnected state, and the first base station includes at least one of: a base station for a cell on which the terminal camps; or a neighboring base station adjacent to the cell on which the terminal camps.

At step 302', at least based on the paging cause capability information, a target base station supporting the paging cause capability is determined from the at least one first base station.

At step 303', the base station information of the target base station is reported to the second base station after an RRC connection between the terminal and the second base station is established.

In the embodiments of the present disclosure, the terminal in the unconnected state can report the base station information of the target base station that supports the paging cause capability recorded by the terminal to the second base station after establishing the RRC connection with the second base station.

In the above-mentioned embodiments, after the terminal in the unconnected state determines the target base station that supports the paging cause capability, the terminal can report the base station information of the target base station supporting the paging cause capability recorded by the terminal to the second base station after establishing the RRC connection with the second base station. Therefore, the purpose of interacting the respective supported paging cause capabilities among base stations can be realized by the information reporting from the terminal, such that the usability of the paging cause mechanism is improved.

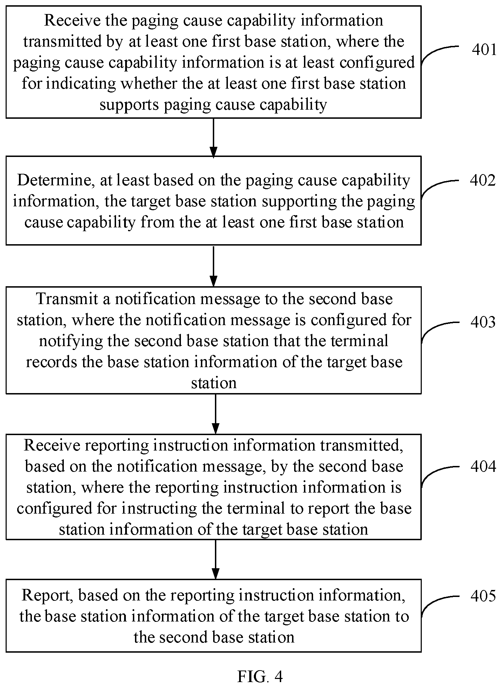

In some embodiments, an information reporting method is provided, and the method can be performed by a terminal including, but being not limited to, a terminal supporting one or more SIM cards. FIG. 4 is a flowchart illustrating the information reporting method according to still another embodiment of the present disclosure. As shown in FIG. 4, the method can include the following steps 401 to 405.

At step 401, the paging cause capability information transmitted by at least one first base station is received, where the paging cause capability information is at least configured for indicating whether the at least one first base station supports paging cause capability.

In the embodiments of the present disclosure, the terminal is in the unconnected state, and the first base station includes at least one of: a base station for a cell on which the terminal camps; or a neighboring base station adjacent to the cell on which the terminal camps.

At step 402, at least based on the paging cause capability information, a target base station supporting the paging cause capability is determined from the at least one first base station.

At step 403, a notification message is transmitted to the second base station, where the notification message is configured for notifying the second base station that the terminal records the base station information of the target base station.

In the embodiments of the present disclosure, the terminal may, during or after establishing the RRC connection with the second base station, notify the second base station by the notification message that the terminal records the base station information of the target base station supporting the paging cause capability.

At step 404, reporting instruction information transmitted, based on the notification message, by the second base station is received, where the reporting instruction information is configured for instructing the terminal to report the base station information of the target base station.

At step 405, based on the reporting instruction information, the base station information of the target base station is reported to the second base station.

In the embodiments, after the second base station determines that the terminal records the base station information of the target base station supporting the paging cause capability, the second base station may, by the reporting instruction information, allow the terminal to report the base station information of the target base station to the second base station. Therefore, the purpose of interacting the respective supported paging cause capabilities among base stations can be realized by the information reporting from the terminal, such that the usability of the paging cause mechanism is improved.

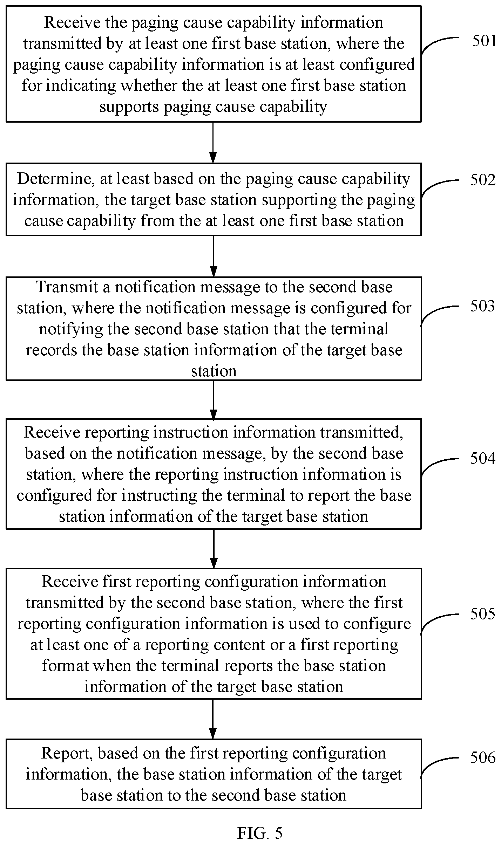

In some embodiments, an information reporting method is provided, and the method can be performed by a terminal including, but being not limited to, a terminal supporting one or more SIM cards. FIG. 5 is a flowchart illustrating the information reporting method according to another embodiment of the present disclosure. As shown in FIG. 5, the method can include the following steps 501 to 506.

At step 501, the paging cause capability information transmitted by at least one first base station is received, where the paging cause capability information is at least configured for indicating whether the at least one first base station supports paging cause capability;

In the embodiments of the present disclosure, the terminal is in the unconnected state, and the first base station includes at least one of: a base station for a cell on which the terminal camps; or a neighboring base station adjacent to the cell on which the terminal camps.

At step 502, at least based on the paging cause capability information, a target base station supporting the paging cause capability is determined from the at least one first base station.

At step 503, a notification message is transmitted to the second base station, where the notification message is configured for notifying the second base station that the terminal records the base station information of the target base station.

In the embodiments of the present disclosure, the terminal may, during or after establishing the RRC connection with the second base station, notify the second base station by the notification message that the terminal records the base station information of the target base station supporting the paging cause capability.

At step 504, reporting instruction information transmitted, based on the notification message, by the second base station is received, where the reporting instruction information is configured for instructing the terminal to report the base station information of the target base station.

At step 505, first reporting configuration information transmitted by the second base station is received, where the first reporting configuration information is used to configure at least one of a reporting content or a first reporting format when the terminal reports the base station information of the target base station.

The reporting content may include, but is not limited to, the base station identifier information of the target base station reported by the terminal. The first reporting format may include, but is not limited to, that the terminal reports the base station information of the target base station via second signaling.

In a possible implementation, the second signaling may include, but is not limited to, user equipment (UE) information response signaling.

The embodiment is only an exemplary illustration, and the solution of configuring the terminal to report the base station information of the target base station via other signaling shall fall within the scope of the present disclosure.

At step 506, based on first reporting configuration information, the base station information of the target base station is reported to the second base station.

In the embodiments of the present disclosure, the terminal may report the base station identifier information of the target base station to the second base station based on the reporting content indicated by the first reporting configuration information, and/or the terminal may report the base station information of the target base station to the second base station through the second signaling based on the first reporting format indicated by the first reporting configuration information.

In the embodiments, the second base station may transmit the first reporting configuration information to the terminal to configure at least one of the reporting content or the first reporting format when the terminal reports the base station information of the target base station. Therefore, the purpose of interacting the respective supported paging cause capabilities among base stations can be realized by the information reporting from the terminal, such that the usability of the paging cause mechanism is improved.

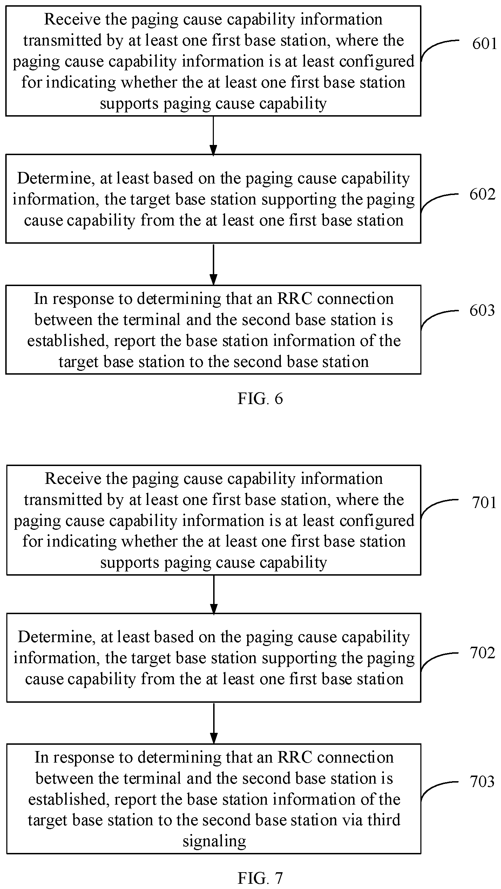

In some embodiments, an information reporting method is provided, and the method can be performed by a terminal including, but being not limited to, a terminal supporting one or more SIM cards. FIG. 6 is a flowchart illustrating the information reporting method according to still another embodiment of the present disclosure. As shown in FIG. 6, the method can include the following steps 601 to 603.

At step 601, the paging cause capability information transmitted by at least one first base station is received, where the paging cause capability information is at least configured for indicating whether the at least one first base station supports paging cause capability;

In the embodiments of the present disclosure, the terminal is in the unconnected state, and the first base station includes at least one of: a base station for a cell on which the terminal camps; or a neighboring base station adjacent to the cell on which the terminal camps.

At step 602, at least based on the paging cause capability information, a target base station supporting the paging cause capability is determined from the at least one first base station.

At step 603, in response to determining that the terminal establishes an RRC connection with the second base station, the base station information of the target base station is reported to the second base station.

The base station information of the target base station includes, but is not limited to, base station identifier information of the target base station.

In the embodiments of the present disclosure, the terminal may directly report the base station information of the target base station recorded by the terminal to the second base station without a request from the base station in the case where the RRC connection has been established between the terminal and the second base station.

In the embodiments of the present disclosure, the terminal may directly report the base station information of the target base station recorded by the terminal to the second base station without a request or a reporting instruction from the base station in the case where the RRC connection has been established between the terminal and the second base station. As a result, the purpose of interacting the respective supported paging cause capabilities among base stations can be realized by the information reporting from the terminal, such that the usability of the paging cause mechanism is improved.

In some embodiments, an information reporting method is provided, and the method can be performed by a terminal including, but being not limited to, a terminal supporting one or more SIM cards. FIG. 7 is a flowchart illustrating the information reporting method according to still another embodiment of the present disclosure. As shown in FIG. 7, the method can include the following steps 701 to 703.

At step 701, the paging cause capability information transmitted by at least one first base station is received, where the paging cause capability information is at least configured for indicating whether the at least one first base station supports paging cause capability.

In the embodiments of the present disclosure, the terminal is in the unconnected state, and the first base station includes at least one of: a base station for a cell on which the terminal camps; or a neighboring base station adjacent to the cell on which the terminal camps.

At step 702, at least based on the paging cause capability information, a target base station supporting the paging cause capability is determined from the at least one first base station.

At step 703, in response to determining that the terminal establishes an RRC connection with the second base station, the base station information of the target base station is reported to the second base station via third signaling.

In a possible implementation, the third signaling may include, but is not limited to, UE assistance information signaling.

In the embodiments of the present disclosure, the terminal may directly report the base station information of the target base station recorded by the terminal to the second base station via the third signaling, without a request from the base station, in the case where the RRC connection has been established between the terminal and the second base station. The present disclosure can realize the purpose of interacting the respective supported paging cause capabilities among base stations by the information reporting from the terminal, especially in the absence of interfaces among base stations, and realize the purpose of interacting the respective supported paging cause capabilities, such that the usability of the paging cause mechanism is improved.

The above-mentioned embodiments are described based on the situation where the terminal is in the unconnected state. It will be understood that in some embodiments, the terminal may be in a connected state. The following embodiments are described based on the situation where the terminal is in the connected state.

In some possible implementations, the terminal is in the connected state, that is, the terminal currently accesses the second base station. At this time, the terminal can receive the paging cause capability information transmitted by the first base station. The paging cause capability information is configured for indicating whether the first base station supports the paging cause capability. The first base station can be a neighboring base station of the second base station. Further, the terminal reports the base station information of the target base station in the at least one first base station that supports the paging cause capability to the second base station, so that the second base station can promptly determine the neighboring base station that supports the paging cause capability.

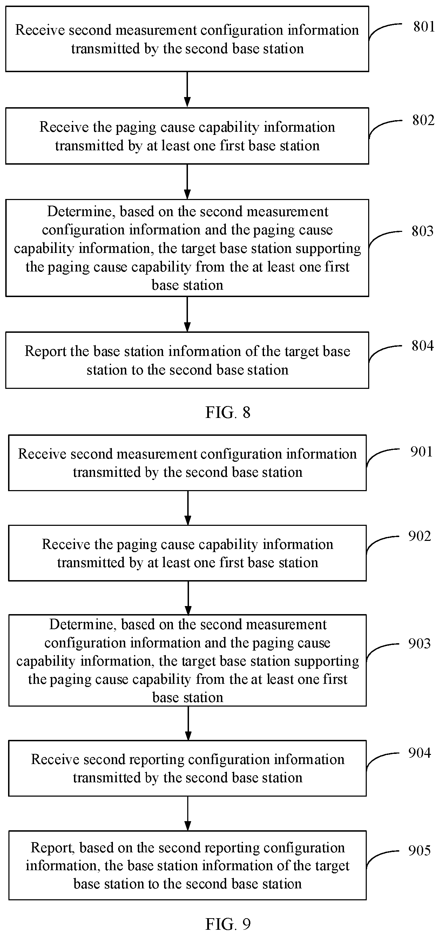

In some embodiments, an information reporting method is provided, and the method can be performed by a terminal including, but being not limited to, a terminal supporting one or more SIM cards. FIG. 8 is a flowchart illustrating the information reporting method according to still another embodiment of the present disclosure. As shown in FIG. 8, the method can include the following steps 801 to 804.

At step 801, the second measurement configuration information transmitted by the accessed second base station is received.

The second measurement configuration information is used to configure the terminal in the connected state to determine the base station information of the first base station and the paging cause capability information of the first base station. The first base station is a neighboring base station adjacent to the second base station, and the paging cause capability information is at least configured to indicate whether the first base station supports the paging cause capability.

At step 802, the paging cause capability information transmitted by the at least one first base station is received.

At step 803, based on the second measurement configuration information and the paging cause capability information, the target base station supporting the paging cause capability is determined from the at least one first base station.

At step 804, the base station information of the target base station is reported to the second base station.

The base station information of the target base station includes, but is not limited to, base station identifier information of the target base station.

In the embodiments, the terminal in the connected state may receive the second measurement configuration information transmitted by the accessed second base station, measure and record the base station information of the target base station in the at least one first base station that supports the paging cause capability, and report the base station information of the target base station to the second base station. As a result, the purpose of interacting the respective supported paging cause capabilities among base stations can be realized by the information reporting from the terminal, such that the usability of the paging cause mechanism is improved.

In some embodiments, an information reporting method is provided, and the method can be performed by a terminal including, but being not limited to, a terminal supporting one or more SIM cards. FIG. 9 is a flowchart illustrating the information reporting method according to another embodiment of the present disclosure. As shown in FIG. 9, the method can include the following steps 901 to 905.

At step 901, the second measurement configuration information transmitted by the accessed second base station is received.

The second measurement configuration information is used to configure the terminal in the connected state to determine the base station information of the first base station and the paging cause capability information of the first base station. The first base station is a neighboring base station adjacent to the second base station, and the paging cause capability information is at least configured to indicate whether the first base station supports the paging cause capability.

In a possible implementation, the terminal can receive the second measurement configuration information transmitted by the second base station via fifth signaling, which includes, but is not limited to, RRC connection reconfiguration signaling. Furthermore, the fifth signaling can be specifically measurement configuration (MeasConfig) signaling in the RRC connection reconfiguration signaling.

The embodiment is only an exemplary illustration, and any solution in which the measurement configuration information (which is used to configure the terminal to report the base station information of the target base station supporting the paging cause capability) transmitted by the second base station is received by signaling will fall within the scope of the present disclosure.

At step 902, the paging cause capability information transmitted by the at least one first base station is received.

At step 903, based on the second measurement configuration information and the paging cause capability information, the target base station supporting the paging cause capability is determined from the at least one first base station.

At step 904, the second measurement configuration information transmitted by the second base station is received.

The second reporting configuration information is used to configure at least one of a reporting content or a second reporting format when the terminal reports the base station information of the target base station.

In the embodiments of the present disclosure, the reporting content may include, but is not limited to, the base station identifier information of the target base station reported by the terminal. The second reporting format may include, but is not limited to, that the terminal reports the base station information of the target base station via fourth signaling. The fourth signaling includes, but is not limited to, measurement report signaling.

At step 905, based on second reporting configuration information, the base station information of the target base station is reported to the second base station.

In the embodiments, the second base station may transmit the second reporting configuration information to the terminal to configure at least one of the reporting content or the second reporting format when the terminal reports the base station information of the target base station. Therefore, the purpose of interacting the respective supported paging cause capabilities among base stations can be realized by the information reporting from the terminal, such that the usability of the paging cause mechanism is improved.

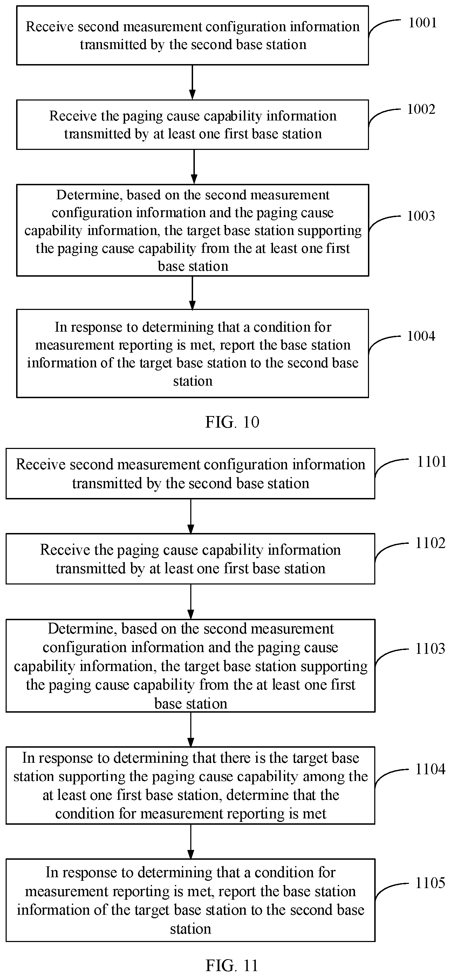

In some embodiments, an information reporting method is provided, and the method can be performed by a terminal including, but being not limited to, a terminal supporting one or more SIM cards. FIG. 10 is a flowchart illustrating the information reporting method according to another embodiment of the present disclosure. As shown in FIG. 10, the method can include the following steps 1001 to 1004.

At step 1001, the second measurement configuration information transmitted by the accessed second base station is received.

The second measurement configuration information is used to configure the terminal in the connected state to determine the base station information of the first base station and the paging cause capability information of the first base station. The first base station is a neighboring base station adjacent to the second base station, and the paging cause capability information is at least configured to indicate whether the first base station supports the paging cause capability.

In a possible implementation, the terminal can receive the second measurement configuration information transmitted by the second base station via fifth signaling, which includes, but is not limited to, RRC connection reconfiguration signaling. Furthermore, the fifth signaling can be specifically measurement configuration (MeasConfig) signaling in the RRC connection reconfiguration signaling.

The embodiment is only an exemplary illustration, and any solution in which the measurement configuration information (which is used to configure the terminal to report the base station information of the target base station supporting the paging cause capability) transmitted by the second base station is received by signaling will fall within the scope of the present disclosure.

At step 1002, the paging cause capability information transmitted by the at least one first base station is received.

At step 1003, based on the second measurement configuration information and the paging cause capability information, the target base station supporting the paging cause capability is determined from the at least one first base station.

At step 1004, in response to determining that a condition for measurement reporting is met, the base station information of the target base station is reported to the second base station.

In the embodiments of the present disclosure, a condition for measurement reporting can be configured by the second base station, and the terminal, when determining that the condition for measurement reporting is met, promptly reports the recorded base station information of the target base station to the second base station. The base station information of the target base station includes, but is not limited to, base station identifier information of the target base station.

In the embodiments, in response to determining that the condition for measurement reporting is met, the base station information of the target base station is reported to the second base station. Therefore, the purpose of interacting the respective supported paging cause capabilities among base stations can be realized by the information reporting from the terminal, such that the usability of the paging cause mechanism is improved.

In some embodiments, an information reporting method is provided, and the method can be performed by a terminal including, but being not limited to, a terminal supporting one or more SIM cards. FIG. 11 is a flowchart illustrating the information reporting method according to another embodiment of the present disclosure. As shown in FIG. 11, the method can include the following steps 1101 to 1105.

At step 1101, the second measurement configuration information transmitted by the accessed second base station is received.

The second measurement configuration information is used to configure the terminal in the connected state to determine the base station information of the first base station and the paging cause capability information of the first base station. The first base station is a neighboring base station adjacent to the second base station, and the paging cause capability information is at least configured to indicate whether the first base station supports the paging cause capability.

In a possible implementation, the terminal can receive the second measurement configuration information transmitted by the second base station via fifth signaling, which includes, but is not limited to, RRC connection reconfiguration signaling. Furthermore, the fifth signaling can be specifically measurement configuration (MeasConfig) signaling in the RRC connection reconfiguration signaling.

The embodiment is only an exemplary illustration, and any solution in which the measurement configuration information (which is used to configure the terminal to report the base station information of the target base station supporting the paging cause capability) transmitted by the second base station is received by signaling will fall within the scope of the present disclosure.

At step 1102, the paging cause capability information transmitted by the at least one first base station is received.

At step 1103, based on the second measurement configuration information and the paging cause capability information, the target base station supporting the paging cause capability is determined from the at least one first base station.

At step 1104, in response to determining that there is the target base station supporting the paging cause capability among the at least one first base station, the terminal determines that the condition for measurement reporting is met.

At step 1105, in response to determining that a condition for measurement reporting is met, the base station information of the target base station is reported to the second base station.

The base station information of the target base station includes, but is not limited to, base station identifier information of the target base station.

In the embodiments, the terminal, when determining that there is the target base station supporting the paging cause capability among the at least one first base station, determines that the condition for measurement reporting is met, so as to report the base station information of the target base station includes to the second base station. Therefore, the purpose of interacting the respective supported paging cause capabilities among base stations can be realized by the information reporting from the terminal, such that the usability of the paging cause mechanism is improved.

An information reporting method of the present disclosure, performed by the first base station, is described in detail below.

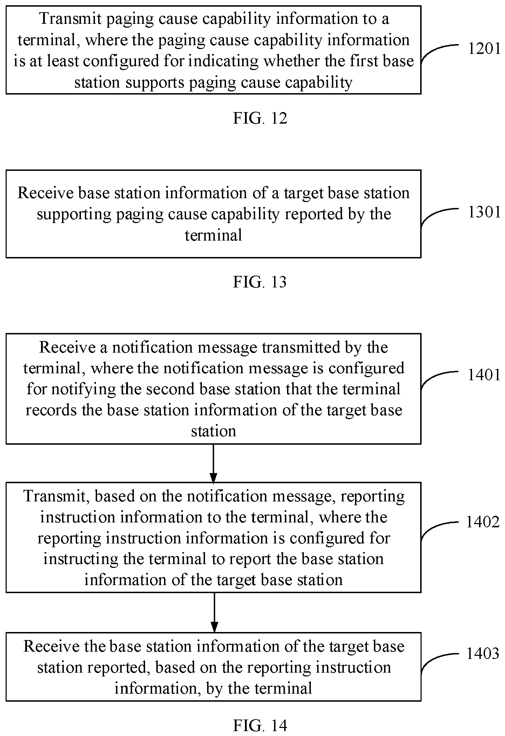

An embodiment of the present disclosure provides an information reporting method, which can be performed by the first base station. FIG. 12 is a flowchart illustrating the information reporting method according to an embodiment of the present disclosure. As shown in FIG. 12, the method can include the following step 1201.

At step 1201, paging cause capability information is transmitted to a terminal, where the paging cause capability information is at least configured for indicating whether the first base station supports paging cause capability.

In the embodiments of the present disclosure, if the terminal is in the unconnected state including, but being not limited to, an inactive state or an idle state, the first base station may be a base station for a cell on which the terminal camps, and/or a neighboring base station adjacent to a cell on which the terminal camps. If the terminal is in the connected state, the first base station may include a neighboring base station of a second base station, and the second base station is a base station accessed by the terminal.

In the embodiments, the first base station can transmit its own paging cause capability information to the terminal, so that the terminal can determine the base station information of the target base station supporting the paging cause capability and report the base station information of the target base station to the accessed second base station, especially in the absence of interfaces between base stations, thereby the usability of the paging cause mechanism is improved.

An information reporting method of the present disclosure, performed by the second base station, is described in detail below.

An embodiment of the present disclosure provides an information reporting method, which can be performed by the second base station, and the second base station is a base station accessed by the terminal. FIG. 13 is a flowchart illustrating the information reporting method according to an embodiment of the present disclosure. As shown in FIG. 13, the method can include the following step 1301.

At step 1301, the base station information of a target base station supporting paging cause capability reported by the terminal is received.

In the embodiment, the second base station may receive the base station information of the target base station reported by the terminal. Thereby, the target base station supporting the paging cause capability is determined, and the usability of the paging cause mechanism is improved.

In some embodiments, for the terminal in the unconnected state, the second base station can receive the base station information of the target base station supporting the paging cause capability which is reported by the terminal, during the RRC connection between the terminal and the second base station is established.

In some embodiments, for the terminal in the unconnected state, the second base station can receive the base station information of the target base station supporting the paging cause capability which is reported by the terminal, after the RRC connection between the terminal and the second base station is established.

In some embodiments, an information reporting method is provided, the method can be performed by the second base station, and the second base station is a base station accessed by the terminal. FIG. 14 is a flowchart illustrating the information reporting method according to another embodiment of the present disclosure. As shown in FIG. 14, the method can include the following steps 1401 to 1403.

At step 1401, a notification message transmitted by the terminal is received, where the notification message is configured for notifying the second base station that the terminal records the base station information of the target base station.

In some embodiments, for the terminal in the unconnected state, the second base station can receive the notification message transmitted by the terminal, and determine, based on the notification message, that the terminal records the base station information of the target base station supporting the paging cause capability, during or after the RRC connection between the terminal and the second base station is established.

At step 1402, based on the notification message, reporting instruction information is transmitted to the terminal, where the reporting instruction information is configured for instructing the terminal to report the base station information of the target base station.

At step 1403, the base station information of the target base station reported by the terminal is received based on the reporting instruction information.

In the embodiments, the second base station can instruct the terminal to report the base station information of the target base station recorded by the terminal after receiving the notification message transmitted by the terminal, such that the target base station supporting the paging cause capability is determined, and the usability of the paging cause mechanism is improved.

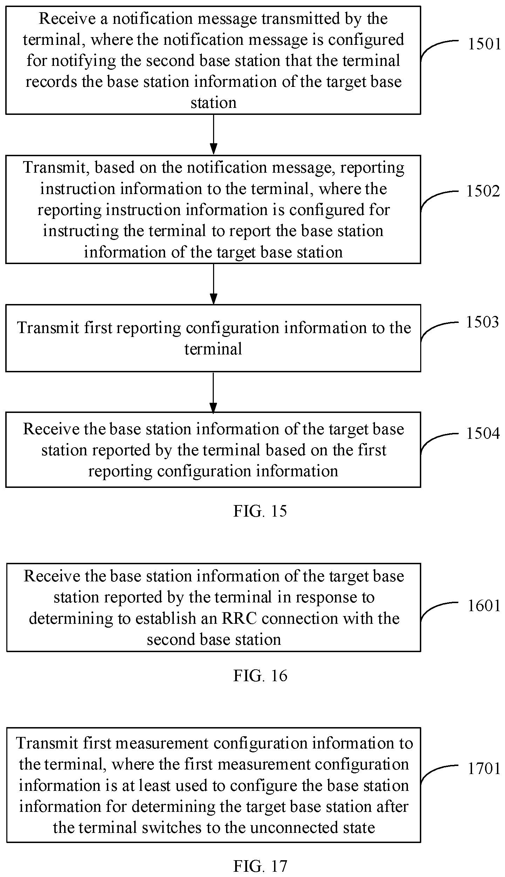

In some embodiments, an information reporting method is provided, the method can be performed by the second base station, and the second base station is a base station accessed by the terminal. FIG. 15 is a flowchart illustrating the information reporting method according to yet another embodiment of the present disclosure. As shown in FIG. 15, the method can include the following steps 1501 to 1504.

At step 1501, a notification message transmitted by the terminal is received, where the notification message is configured for notifying the second base station that the terminal records the base station information of the target base station.

In some embodiments, for the terminal in the unconnected state, the second base station can receive the notification message transmitted by the terminal, and determine, based on the notification message, that the terminal records the base station information of the target base station supporting the paging cause capability, during or after the RRC connection between the terminal and the second base station is established.

At step 1502, based on the notification message, reporting instruction information is transmitted to the terminal, where the reporting instruction information is configured for instructing the terminal to report the base station information of the target base station.

The base station information of the target base station includes, but is not limited to, base station identifier information of the target base station.

At step 1503, a first reporting configuration information is transmitted to the terminal.

The first reporting configuration information is used to configure at least one of a reporting content or a first reporting format when the terminal reports the base station information of the target base station. The reporting content includes base station identifier information of the target base station reported by the terminal. The first reporting format includes that the terminal reports the base station information of the target base station via second signaling. The second signaling includes user equipment (UE) information response signaling.

At step 1504, the base station information of the target base station reported by the terminal is received based on the first reporting configuration information.

In the embodiment, the second base station can transmit the first reporting configuration information to the terminal to configure at least one of a reporting content or a first reporting format when the terminal reports the base station information of the target base station. Thereby, the fact that the target base station supporting the paging cause capability is determined based on the reporting of the terminal is realized, and the usability of the paging cause mechanism is improved.

In some embodiments, an information reporting method is provided, the method can be performed by the second base station, and the second base station is a base station accessed by the terminal. FIG. 16 is a flowchart illustrating the information reporting method according to still another embodiment of the present disclosure. As shown in FIG. 16, the method can include the following step 1601.

At step 1601, the base station information of the target base station supporting the paging cause capability which is reported by the terminal in response to determining to establish an RRC connection with the second base station is received.

In the embodiment, the second base station can receive the base station information of the target base station supporting the paging cause capability which is reported by the terminal, when the RRC connection between the terminal and the second base station is established. Thereby, the fact that the target base station supporting the paging cause capability is determined based on the reporting of the terminal is realized, and the usability of the paging cause mechanism is improved.

In some embodiments, an information reporting method is provided, the method can be performed by the second base station, and the second base station is a base station last accessed by the terminal before the terminal switches to the unconnected state. FIG. 17 is a flowchart illustrating the information reporting method according to still another embodiment of the present disclosure. As shown in FIG. 17, the method can include the following step 1701.

At step 1701, first measurement configuration information is transmitted to the terminal, where the first measurement configuration information is used to configure at least the base station information for determining the target base station after the terminal switches to the unconnected state.

In a possible implementation, the first measurement configuration information can configure the terminal to measure and record the base station information of the target base station that supports the paging cause capability after the terminal switches to the unconnected state.

In a possible implementation, the first measurement configuration information can configure the terminal to measure and record the base station information of the target base station that supports the paging cause capability after the terminal switches to the unconnected state. Also, the first measurement configuration information can configure the terminal to receive the paging cause capability information transmitted by the first base station through first signaling after the terminal switches to the unconnected state. The first base station includes at least one of: a base station for a cell on which the terminal camps; or a neighboring base station adj acent to the cell on which the terminal camps. where the paging cause capability information is at least configured for indicating whether the first base station supports the paging cause capability.

The first signaling includes, but is not limited to, at least one of: RRC release signaling; or RRC reconfiguration signaling.

In the embodiments of the present disclosure, step 1701 may be performed alone or in combination with step 1301 as described above. When step 1701 is performed in combination with step 1301, the second base station is both a base station last accessed by the terminal before the terminal switches to the unconnected state and a base station accessed by terminal after the terminal switches to the connected state, i.e., this corresponds to the case where the third base station and the second base station are the same base station.

In the embodiment, the second base station can transmit the first measurement configuration information to the terminal when the second base station is a base station last accessed by the terminal before the terminal switches to the unconnected state. The first measurement configuration information is at least used to configure the terminal to determine the base station information of the target base station after the terminal switches to the unconnected state, such that the purpose of determining the target base station supporting the paging cause capability is realized, and the usability of the paging cause mechanism is improved.

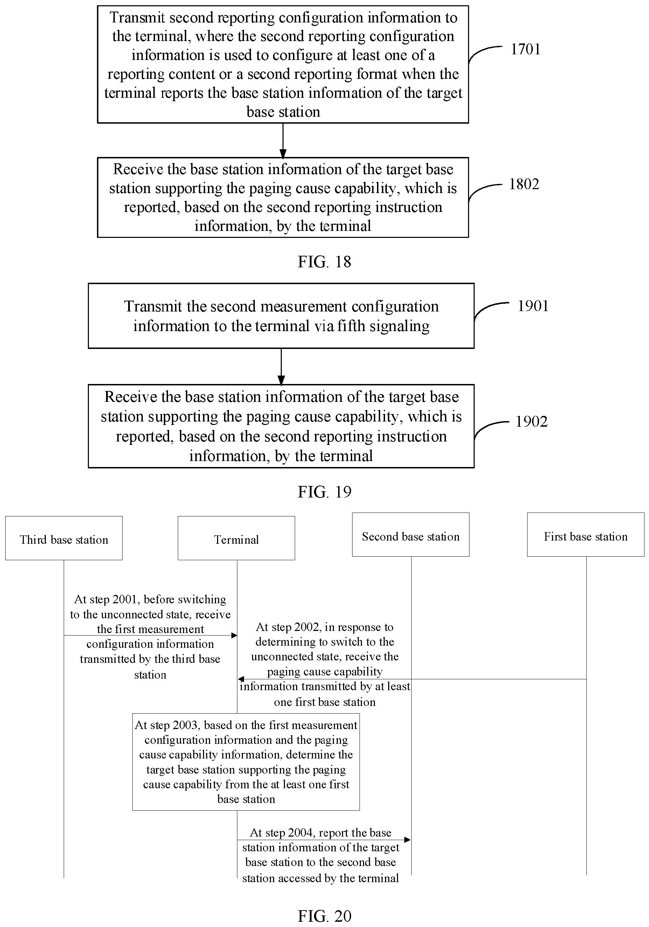

In some embodiments, an information reporting method is provided, the method can be performed by the second base station, and the second base station is a base station accessed by the terminal. FIG. 18 is a flowchart illustrating the information reporting method according to still another embodiment of the present disclosure. As shown in FIG. 18, the method can include the following steps 1801 to 1802.

At step 1801, second reporting configuration information is transmitted to the terminal, where the second reporting configuration information is used to configure at least one of a reporting content or a second reporting format when the terminal reports the base station information of the target base station.

The reporting content includes base station identifier information of the target base station reported by the terminal. The second reporting format includes that the terminal reports the base station information of the target base station via fourth signaling. The fourth signaling includes, but is not limited to, measurement report signaling.

At step 1802, the base station information of the target base station supporting the paging cause capability which is reported by the terminal is received based on the second reporting configuration information.

The second base station can transmit the second reporting configuration information to the terminal, where the second reporting configuration information is used to configure at least one of a reporting content or a second reporting format when the terminal reports the base station information of the target base station.

In the embodiment, the terminal can report the base station information of the target base station according to the configuration of the second base station, which is easy to implement and has high usability.

In some embodiments, an information reporting method is provided, the method can be performed by the second base station, and the second base station is a base station accessed by the terminal. FIG. 19 is a flowchart illustrating the information reporting method according to still another embodiment of the present disclosure. As shown in FIG. 19, the method can include the following steps 1901 to 1902.

At step 1901, second measurement configuration information is transmitted to the terminal via fifth signaling.

The second reporting configuration information is used to configure at least one of a reporting content or a second reporting format when the terminal reports the base station information of the target base station. The fifth signaling may include, but is not limited to, RRC connection reconfiguration signaling. Specifically, the fifth signaling may be measurement configuration (MeasConfig) signaling in the RRC connection reconfiguration signaling.

The second base station is a base station that the terminal currently accesses. The reporting content includes base station identifier information of the target base station reported by the terminal. The second reporting format includes that the terminal reports the base station information of the target base station via fourth signaling. The fourth signaling includes, but is not limited to, measurement report signaling.

At step 1902, the base station information of the target base station supporting the paging cause capability which is reported by the terminal is received based on the second reporting configuration information.

The second base station can transmit the second reporting configuration information to the terminal, where the second reporting configuration information is used to configure at least one of a reporting content or a second reporting format when the terminal reports the base station information of the target base station.

In the embodiment, the terminal can report the base station information of the target base station according to the configuration of the second base station, which is easy to implement and has high usability.

In some embodiments, an information reporting method is provided. FIG. 20 is a flowchart illustrating the information reporting method according to still another embodiment of the present disclosure. As shown in FIG. 20, the method can include the following steps 2001 to 2004.

At step 2001, the terminal, before switching to the unconnected state, receives the first measurement configuration information transmitted by the third base station.

In the embodiments of the present disclosure, the third base station includes a base station last accessed by the terminal before the terminal switches to the unconnected state, and the unconnected state includes, but is not limited to, an inactive state and an idle state. The first measurement configuration information is used to configure the terminal to determine the base station information of the target base station after the terminal switches to an unconnected state. Alternatively, the first measurement configuration information is used to configure the terminal to determine the base station information of the target base station after the terminal switches to the unconnected state, as well as to configure the terminal to receive, via first signaling, the paging cause capability information transmitted by the first base station after the terminal switches to the unconnected state. The first signaling includes, but is not limited to, at least one of: RRC release signaling; or RRC reconfiguration signaling.

In the embodiments of the present disclosure, the third base station may be the same as or different from the first base station, or the third base station may be the same as or different from the second base station, and the present disclosure is not limited thereto. The exemplary explanation in FIG. 20 is that the third base station, the first base station, and the second base station are different from each other.

At step 2002, the terminal, in response to determining to switch to the unconnected state, receives the paging cause capability information transmitted by at least one first base station, where the paging cause capability information is at least configured for indicating whether the at least one first base station supports the paging cause capability.

The first base station includes at least one of: a base station for a cell on which the terminal camps; or a neighboring base station adjacent to the cell on which the terminal camps.

At step 2003, the terminal, based on the first measurement configuration information and the paging cause capability information, determines the target base station supporting the paging cause capability from the at least one first base station.

At step 2004, the terminal reports the base station information of the target base station to the second base station accessed by the terminal.

In the embodiment of the disclosure, the second base station is a base station accessed by the terminal. The terminal can report the base station information of the target base station during or after the RRC connection between the terminal and the second base station is established. Specifically, the terminal can notify the second base station that the base station information of the target base station has been recorded on the terminal. Furthermore, the terminal, based on the reporting instruction information transmitted by the second base station, reports the base station information of the target base station to the second base station.

Alternatively, instead of notifying the second base station that the base station information of the target base station is recorded on the terminal, the terminal can directly report the base station information of the target base station to the second base station once the terminal has determined that the RRC connection has been established with the second base station.

In the embodiment, the terminal in the unconnected state can determine the target base station that supports the paging cause capability based on the first measurement configuration information transmitted by the third base station when switching to the unconnected state. Therefore, the purpose of interacting the respective supported paging cause capabilities among base stations can be realized by the information reporting from the terminal, such that the usability of the paging cause mechanism is improved.

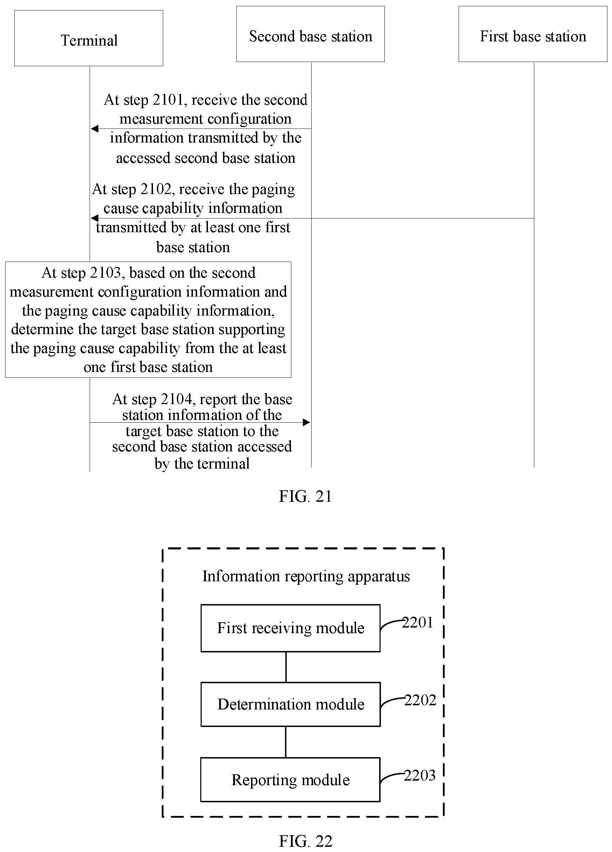

In some embodiments, an information reporting method is provided. FIG. 21 is a flowchart illustrating the information reporting method according to still another embodiment of the present disclosure. As shown in FIG. 21, the method can include the following steps 2101 to 2104.

At step 2101, the terminal receives the second measurement configuration information transmitted by the accessed second base station.

The second measurement configuration information is used to configure the terminal to determine the base station information of the first base station and the paging cause capability information of the first base station when the terminal is in the connected state.

At step 2102, the terminal receives the paging cause capability information transmitted by at least one first base station, where the paging cause capability information is at least configured for indicating whether the at least one first base station supports paging cause capability.

The first base station is a neighboring base station of the second base station.

At step 2103, the terminal, based on the second measurement configuration information and the paging cause capability information, determines the target base station supporting the paging cause capability from the at least one first base station.

At step 2104, in response to determining that there is the target base station supporting the paging cause capability among the at least one first base station, the terminal determines that the condition for measurement reporting is met.

At step 2105, the terminal reports the base station information of the target base station to the second base station accessed by the terminal.

In the embodiment, the terminal in the connected state may, based on the second measurement configuration information transmitted by the accessed second base station, determine the base station information of the target base station that supports the paging cause capability among the neighboring base stations of the second base station, and report the base station information of the target base station to the second base station. Therefore, the purpose of interacting the respective supported paging cause capabilities among base stations can be realized by the information reporting from the terminal, such that the usability of the paging cause mechanism is improved.

It will be noted that the second base station can perform relevant operations based on the paging cause capability after determining other base station that support the paging cause capability based on the target base station information reported by the terminal.

In a possible implementation, in the case where both the neighboring base station and the second base station support the paging cause capability, if the second base station determines that there is a need to transmit the paging cause between base stations, for example, for a terminal in the inactive state, if the second base station determines that the paging cause needs to be added to a radio access network (RAN) paging message transmitted to the neighboring base station, and determines that there is a need to transmit the paging cause between the base stations, the second base station can directly transmit the paging cause to the neighboring base station via the interface between the base stations.

In another possible implementation, if the second base station determines that there is a need to transmit the paging cause between the base stations, for example, for a terminal in the inactive state, if the second base station determines that there is a need to add the paging cause to the RAN paging message transmitted to the neighboring base station, and determines that there is a need to transmit the paging cause between the base stations, but the second base station determines, based on the base station information of the target base station supporting the paging cause capability reported by the terminal, that at least one of the second base station or the neighboring base station does not support the paging cause capability, the second base station may determine that it will not transmit the paging cause to the neighboring base station via the interface between the base stations.

The above implementations are for the terminal in the inactive state. Based on the respective paging cause capability supported by each base station, it is determined whether to interact and page the paging cause for the terminal in the inactive state through the interface between the base stations. In the embodiments of the present disclosure, for a terminal in the connected state, it is also possible to determine, based on the respective paging cause capability supported by each base station, whether to interact and page the paging cause for the terminal in the connection state through the interface between the base stations. The specific implementation is similar to the above-mentioned implementation (for the terminal in the inactive state) and will not be repeated herein.

Corresponding to the foregoing method embodiments, the present disclosure further provides corresponding apparatuses embodiments.

FIG. 22 is a block diagram illustrating an information reporting apparatus according to an embodiment of the present disclosure. The apparatus is applied to the terminal. As shown in FIG. 22, The apparatus may include a first receiving module 2201, a determination module 2202, and a reporting module 2203.

The first receiving module 2201 is configured to receive paging cause capability information transmitted by at least one first base station, where the paging cause capability information is at least configured for indicating whether the at least one first base station supports paging cause capability.

The determination module 2202 is configured to determine, at least based on the paging cause capability information, a target base station supporting the paging cause capability from the at least one first base station.

The reporting module 2203 is configured to report, based on the paging cause capability information, the base station information of the target base station to a second base station accessed by the terminal.

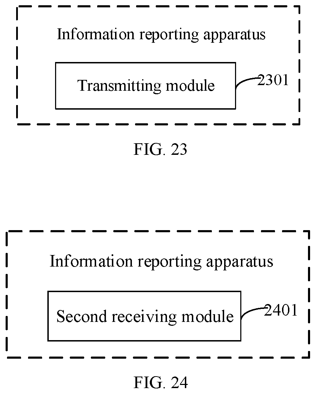

FIG. 23 is a block diagram illustrating an information reporting apparatus according to an embodiment of the present disclosure. The apparatus is applied to the first station. As shown in FIG. 23, The apparatus may include a transmitting module 2301.

The transmitting module 2301 is configured to transmit paging cause capability information to a terminal, where the paging cause capability information is at least configured for indicating whether the first base station supports paging cause capability.

When the terminal is in an unconnected state, the at least one first base station includes at least one of:
a base station for a cell on which the terminal camps; or
a neighboring base station adjacent to the cell on which the terminal camps.

When the terminal is in the connected state, the first base station may include a neighboring base station of a second base station, and the second base station is a base station accessed by the terminal.

FIG. 24 is a block diagram illustrating an information reporting apparatus according to an embodiment of the present disclosure. The apparatus is applied to the second station. As shown in FIG. 24, The apparatus may include the second receiving module 2401.

The second receiving module 2401 is configured to receive base station information of a target base station supporting paging cause capability reported by a terminal.

The second base station is a base station that the terminal currently accesses.

Since embodiments of the apparatus substantially corresponds to embodiments of the method, relevant parts may be referred to the description of the embodiments of the method. The apparatus examples described above are merely illustrative, where the units described as separate components may or may not be physically separated, and the components displayed as units may or may not be physical units, i.e., may be located in one place or may be distributed to multiple network units. Some or all of these modules can be selected according to actual needs to achieve the purpose of the solution of the present disclosure. It may be understood and implemented by those skilled in the art without creative work.

Correspondingly, the present disclosure further provides a computer-readable storage medium storing computer programs, where the programs, when executed by a processor, cause the processor to perform any one of the information reporting methods of the terminal.

Correspondingly, the present disclosure further provides a computer-readable storage medium storing computer programs, where the programs, when executed by a processor, cause the processor to perform any one of the information reporting methods of the base station. The base station includes a first base station, a second base station and a third base station, which is not limited to the present disclosure.

Correspondingly, the present disclosure provides an information reporting device, and the device includes:
a processor; and
a memory storing instructions executable by the processor;
where the instructions, when executed by the processor, cause the processor to perform any one of the information reporting methods of the terminal.

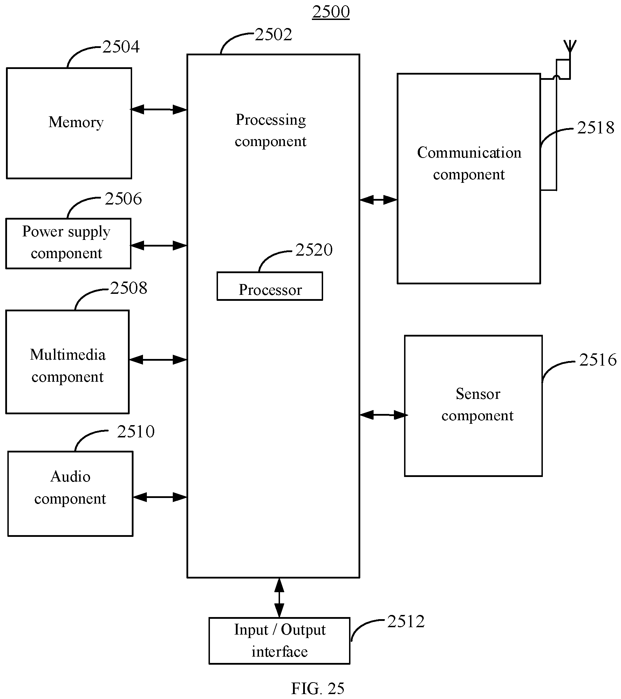

FIG. 25 is a block diagram illustrating an information reporting device 2500 according to an embodiment of the present disclosure. For example, the device 2500 may be a terminal such as a cell phone, a tablet computer, an e-book reader, a multimedia playback device, a wearable device, a vehicle user equipment, an iPad, a smart TV, and the like.

Referring to FIG 25, the device 2500 can include one or more of the following components: a processing component 2502, a memory 2504, a power supply component 2506, a multimedia component 2508, an audio component 2510, an input/output (I/O) interface 2512, a sensor component 2516, and a communication component 2518.

The processing component 2502 usually controls overall operations of the device 2500, such as operations related to display, a telephone call, data random access, a camera operation and a record operation. The processing component 2502 may include one or more processors 2520 to execute instructions to complete all or a part of the steps of the above methods. Further, the processing component 2502 may include one or more modules to facilitate interaction between the processing component 2502 and another component. For example, the processing component 2502 may include a multimedia module to facilitate the interaction between the multimedia component 2508 and the processing component 2502. As another example, the processing component 2502 can read the executable instructions from the memory to realize the steps of an information reporting method provided by the above embodiments.

The memory 2504 is configured to store different types of data to support the operations of the device 2500. Examples of such data include instructions, contact data, phone book data, messages, pictures, videos, and so on for any application or method that operates on the device 2500. The memory 2504 may be implemented by any type of volatile or non-volatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a disk or optical disk.

The power supply component 2506 provides power for different components of the device 2500. The power supply component 2506 may include a power management system, one or more power sources, and other components associated with generating, managing and distributing power for the device 2500.

The multimedia component 2508 includes a screen for providing an output interface between the device 2500 and a user. In some examples, the multimedia component 2508 may include a front camera and/or a rear camera. When the device 2500 is in an operation mode, such as a shooting mode or a video mode, the front camera and/or the rear camera can receive external multimedia data. Each of the front camera and the rear camera may be a fixed optical lens system or be of a focal length and a capability of an optical zoom.

The audio component 2510 is configured to output and/or input an audio signal. For example, the audio component 2510 may include a microphone (MIC). When the device 2500 is in an operating mode, such as a call mode, a recording mode and a speech recognition mode, the microphone is configured to receive an external audio signal. The received audio signal may be further stored in the memory 2504 or sent via the communication component 2518. In some embodiments, the audio component 2510 also includes a speaker for outputting an audio signal.

The I/O interface 2512 may provide an interface between the processing component 2502 and peripheral interface modules. The above peripheral interface modules may include a keyboard, a click wheel, buttons and so on. Such buttons may include but not limited to: a home button, a volume button, a start button and a lock button.

The sensor component 2516 includes one or more sensors for providing state assessments in different aspects for the device 2500. For example, sensor component 2516 can detect an open/closed state of device 2500, a relative positioning of components, such as the display and keypad of device 2500, and sensor component 2516 can also detect a change in position of device 2500 or a component of device 2500, the presence or absence of user contact with device 2500, orientation or acceleration/deceleration of device 2500, and temperature change of device 2500. The sensor component 2516 may include a proximity sensor configured to detect presence of a nearby object without any physical contact. The sensor component 2516 may also include an optical sensor, such as a CMOS or CCD image sensor used in an imaging application. In some embodiments, the sensor component 2516 may also include an acceleration sensor, a gyroscope sensor, a magnetic sensor, a pressure sensor, or a temperature sensor.

The communication component 2518 is configured to facilitate wired or wireless communication between the device 2500 and other devices. The device 2500 may access a wireless network based on a communication standard, such as WiFi, 2G, 3G, 4G, 5G, or 6G, or a combination thereof. In some embodiments, the communication component 2518 may receive a broadcast signal or broadcast-related information from an external broadcast management system via a broadcast channel. In an example, the communication component 2518 may also include a near field communication (NFC) module to facilitate short-range communications. For example, the NFC module may be implemented based on a radio frequency identification (RFID) technology, an infrared data association (IrDA) technology, an ultra wide band (UWB) technology, a Bluetooth (BT) technology and other technologies.

In an example, the device 2500 may be implemented by one or more application specific integrated circuits (ASIC), digital signal processors (DSP), digital signal processing devices (DSPD), programmable logic devices (PLD), field programmable gate arrays (FPGA), controllers, microcontrollers, microprocessors or other electronic elements, for executing any one of the information reporting methods of the terminal.

In an example, a non-transitory computer-readable storage medium including instructions, such as the memory 2504 including instructions, is also provided. The above instructions may be executed by the processor 2520 of the apparatus 2500 to complete the above-mentioned methods. For example, the non-transitory computer-readable storage medium may be a read-only memory (ROM), a random access memory (RAM), a CD-ROM, a magnetic tape, a floppy disk and an optical data storage device, etc.

Correspondingly, the present disclosure provides a information reporting device, and the device includes:
a processor; and
a memory storing instructions executable by the processor;
where the instructions, when executed by the processor, cause the processor to perform any one of the information reporting methods of the base stations.

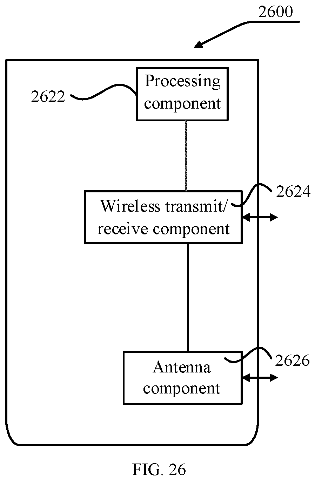

As shown in FIG. 26, FIG. 26 is a schematic structural diagram illustrating an information reporting device 2600 according to an embodiment of the present disclosure. The device 2600 may be provided as a base station. Referring to FIG. 26, the device 2600 includes a processing component 2622, a wireless transmitting/receiving component 2624, an antenna component 2626, and a signal processing portion specific to a wireless interface. The processing component 2622 may further include one or more processors.

One of the processors in the processing component 2622 may be configured to execute any one of the information reporting methods.

After considering the specification and practicing the present disclosure, those skilled in the art would easily conceive of other implementations of the present disclosure. The present disclosure is intended to cover any variations, uses, modification or adaptations of the present disclosure that follow the general principles thereof and include common knowledge or conventional technical means in the related art that are not disclosed in the present disclosure. The specification and examples are considered as exemplary only, with a true scope and spirit of the present disclosure being indicated by the following claims.

It is to be understood that the present disclosure is not limited to the precise construction described herein and shown in the drawings, and that various modifications and changes may be made without departing from the scope thereof. The scope of the disclosure is to be limited only by the appended claims.

## Claims

1. An information reporting method, performed by a terminal, and comprising:
receiving paging cause capability information transmitted by at least one first base station, wherein the paging cause capability information is at least configured for indicating whether the at least one first base station supports paging cause capability;
determining, at least based on the paging cause capability information, a target base station supporting the paging cause capability from the at least one first base station; and
reporting base station information of the target base station to a second base station accessed by the terminal.

2. The method of claim 1, wherein when the terminal is in an unconnected state, the at least one first base station comprises at least one of:
a base station for a cell on which the terminal camps; or
a neighboring base station adjacent to the cell on which the terminal camps.

3. The method of claim 2, further comprising:
receiving, before switching to the unconnected state, first measurement configuration information transmitted by a third base station, wherein the first measurement configuration information is at least used to configure the base station information for determining the target base station after the terminal switches to the unconnected state;
wherein determining, at least based on the paging cause capability information, the target base station supporting the paging cause capability from the at least one first base station comprises:
in response to determining that the terminal switches to the unconnected state, determining, based on the first measurement configuration information and the paging cause capability information, the target base station supporting the paging cause capability from the at least one first base station.

4. The method of claim 3, wherein the third base station comprises a base station last accessed by the terminal before the terminal switches to the unconnected state.

5. The method of claim 3, wherein the first measurement configuration information is further used to configure the paging cause capability information received by the terminal via first signaling after the terminal switches to the unconnected state.

6. The method of claim 5, wherein the first signaling comprises at least one of:
radio resource control (RRC) release signaling; or
RRC reconfiguration signaling.

7. The method of claim 2, wherein reporting the base station information of the target base station to the second base station accessed by the terminal comprises:
reporting the base station information of the target base station to the second base station during an RRC connection between the terminal and the second base station is established; or
reporting the base station information of the target base station to the second base station after the RRC connection between the terminal and the second base station is established.

8. The method of claim 7, wherein reporting the base station information of the target base station to the second base station comprises:
transmitting a notification message to the second base station, wherein the notification message is configured for notifying the second base station that the terminal records the base station information of the target base station;
receiving reporting instruction information transmitted, based on the notification message, by the second base station, wherein the reporting instruction information is configured for instructing the terminal to report the base station information of the target base station; and
reporting, based on the reporting instruction information, the base station information of the target base station to the second base station.

9. The method of claim 8, further comprising:
receiving first reporting configuration information transmitted by the second base station, wherein the first reporting configuration information is used to configure at least one of a reporting content or a first reporting format when the terminal reports the base station information of the target base station;
wherein reporting the base station information of the target base station to the second base station comprises:
reporting, based on the first reporting configuration information, the base station information of the target base station to the second base station.

10. The method of claim 9, wherein the reporting content comprises base station identifier information of the target base station reported by the terminal; and/or
the first reporting format comprises that the terminal reports the base station information of the target base station via second signaling.

11. The method of claim 10, wherein the second signaling comprises user equipment (UE) information response signaling.

12. The method of claim 2, wherein reporting the base station information of the target base station to the second base station accessed by the terminal comprises:
in response to determining that an RRC connection between the terminal and the second base station is established, reporting the base station information of the target base station to the second base station.

13. The method of claim 12, wherein reporting the base station information of the target base station to the second base station comprises:
reporting the base station information of the target base station to the second base station via third signaling.

14. The method of claim 13, wherein the third signaling comprises UE assistance information signaling.

15. The method of claim 1, wherein the at least one first base station comprises a neighboring base station adjacent to the second base station when the terminal is in a connected state.

16. The method of claim 15, further comprising:
receiving second measurement configuration information transmitted by the second base station, wherein the second measurement configuration information is used to configure base station information for determining one of the at least one first base station and paging cause capability information for the first base station when the terminal is in the connected state;
wherein determining, at least based on the paging cause capability information, the target base station supporting the paging cause capability from the at least one first base station comprises:
determining, based on the second measurement configuration information and the paging cause capability information, the target base station supporting the paging cause capability from the at least one first base station.

17. The method of claim 16, further comprising:
receiving second reporting configuration information transmitted by the second base station, wherein the second reporting configuration information is used to configure at least one of a reporting content or a second reporting format when the terminal reports the base station information of the target base station;
wherein reporting the base station information of the target base station to the second base station comprises:
reporting, based on the second reporting configuration information, the base station information of the target base station to the second base station.

18. The method of claim 17, wherein the reporting content comprises base station identifier information of the target base station reported by the terminal; and/or
the second reporting format comprises that the terminal reports the base station information of the target base station via fourth signaling.

19. The method of claim 18, wherein the fourth signaling comprises measurement report signaling.

20. The method of claim 16, wherein receiving the second measurement configuration information transmitted by the second base station comprises:
receiving the second measurement configuration information transmitted by the second base station via fifth signaling.

21. The method of claim 20, wherein the fifth signaling comprises RRC connection reconfiguration signaling.

22. The method of claim 21, wherein the fifth signaling comprises measurement configuration (MeasConfig) signaling in the RRC connection reconfiguration signaling.

23. The method of claim 15, wherein reporting the base station information of the target base station to the second base station accessed by the terminal comprises:
in response to determining that a condition for measurement reporting is met, reporting the base station information of the target base station to the second base station.

24. The method of claim 23, wherein determining that the condition for measurement reporting is met comprises:
in response to determining that there is the target base station supporting the paging cause capability among the at least one first base station, determining that the condition for measurement reporting is met.

25. The method of any one of claims 1 to 24, wherein the base station information of the target base station comprises base station identifier information of the target base station.

26. An information reporting method, performed by a first base station, and comprising:
transmitting paging cause capability information to a terminal, wherein the paging cause capability information is at least configured for indicating whether the first base station supports paging cause capability.

27. The method of claim 26, wherein when the terminal is in an unconnected state, the first base station comprises at least one of:
a base station for a cell on which the terminal camps; or
a neighboring base station adjacent to the cell on which the terminal camps.

28. The method of claim 26, wherein when the terminal is in a connected state, the first base station comprises a neighboring base station adjacent to a second base station, and the second base station is a base station accessed by the terminal.

29. An information reporting method, performed by a second base station accessed by a terminal, and comprising:
receiving base station information of a target base station supporting paging cause capability reported by the terminal.

30. The method of claim 29, wherein receiving the base station information of the target base station supporting the paging cause capability reported by the terminal comprises:
receiving the base station information of the target base station reported by the terminal during a radio resource control (RRC) connection between the terminal and the second base station is established; or
receiving the base station information of the target base station reported by the terminal after the RRC connection between the terminal and the second base station is established.

31. The method of claim 30, further comprising:
receiving a notification message transmitted by the terminal, wherein the notification message is configured for notifying the second base station that the terminal records the base station information of the target base station; and
transmitting, based on the notification message, reporting instruction information to the terminal, wherein the reporting instruction information is configured for instructing the terminal to report the base station information of the target base station;
wherein receiving the base station information of the target base station supporting the paging cause capability reported by the terminal comprises:
receiving the base station information of the target base station reported, based on the reporting instruction information, by the terminal.

32. The method of claim 31, further comprising:
transmitting first reporting configuration information to the terminal, wherein the first reporting configuration information is used to configure at least one of a reporting content or a first reporting format when the terminal reports the base station information of the target base station;
wherein receiving the base station information of the target base station supporting the paging cause capability reported by the terminal comprises:
receiving the base station information of the target base station reported by the terminal based on the first reporting configuration information.

33. The method of claim 32, wherein the reporting content comprises base station identifier information of the target base station reported by the terminal; and/or
the first reporting format comprises that the terminal reports the base station information of the target base station via second signaling.

34. The method of claim 33, wherein the second signaling comprises user equipment (UE) information response signaling.

35. The method of claim 29, wherein receiving the base station information of the target base station supporting the paging cause capability reported by the terminal comprises:
receiving the base station information of the target base station reported by the terminal in response to determining to establish an RRC connection with the second base station.

36. The method of claim 29, wherein the second base station is a base station last accessed by the terminal before the terminal switches to an unconnected state, and the method further comprises:
transmitting first measurement configuration information to the terminal, wherein the first measurement configuration information is at least used to configure the base station information for determining the target base station after the terminal switches to the unconnected state.

37. The method of claim 36, wherein the first measurement configuration information is further used to configure the paging cause capability information, transmitted by a first base station, received by the terminal via first signaling after the terminal switches to the unconnected state;
wherein the first base station comprises at least one of:
a base station for a cell on which the terminal camps; or
a neighboring base station adjacent to the cell on which the terminal camps;
wherein the paging cause capability information is at least configured for indicating whether the first base station supports the paging cause capability.

38. The method of claim 37, wherein the first signaling comprises at least one of:
radio resource control (RRC) release signaling; or
RRC reconfiguration signaling.

39. The method of claim 29, wherein the second base station is a base station accessed by the terminal in a connected state, and the method further comprises:
transmitting second measurement configuration information to the terminal, wherein the second measurement configuration information is at least used to configure base station information for determining the first base station and paging cause capability information for the first base station when the terminal is in the connected state;
wherein the first base station is a neighboring base station adjacent to the second base station, and the paging cause capability information is at least configured for indicating whether the first base station supports the paging cause capability.

40. The method of claim 39, further comprising:
transmitting second reporting configuration information to the terminal, wherein the second reporting configuration information is used to configure at least one of a reporting content or a second reporting format when the terminal reports the base station information of the target base station.

41. The method of claim 40, wherein the reporting content comprises base station identifier information of the target base station reported by the terminal; and/or
the second reporting format comprises that the terminal reports the base station information of the target base station via fourth signaling.

42. The method of claim 41, wherein the fourth signaling comprises measurement report signaling.

43. The method of claim 39, wherein transmitting the second measurement configuration information to the terminal comprises:
transmitting the second measurement configuration information to the terminal via fifth signaling.

44. The method of claim 43, wherein the fifth signaling comprises RRC connection reconfiguration signaling.

45. The method of claim 44, wherein the fifth signaling comprises measurement configuration (MeasConfig) signaling in the RRC connection reconfiguration signaling.

46. The method of any one of claims 29 to 45, wherein the base station information of the target base station comprises base station identifier information of the target base station.

47. An information reporting apparatus, applied to a terminal, and comprising:
a first receiving module, configured to receive paging cause capability information transmitted by at least one first base station, wherein the paging cause capability information is at least configured for indicating whether the at least one first base station supports paging cause capability;
a determination module, configured to determine, at least based on the paging cause capability information, a target base station supporting the paging cause capability from the at least one first base station; and
a reporting module, configured to report, based on the paging cause capability information, the base station information of the target base station to a second base station accessed by the terminal.

48. An information reporting apparatus, applied to a first base station, and comprising:
a transmitting module, configured to transmit paging cause capability information to a terminal, wherein the paging cause capability information is at least configured for indicating whether the first base station supports paging cause capability.

49. An information reporting apparatus, applied to a second base station, and comprising:
a second receiving module, configured to receive base station information of a target base station supporting paging cause capability reported by a terminal.

50. A computer-readable storage medium, storing computer programs thereon, wherein the computer programs, when executed by a processor, cause the processor to perform the information reporting method of any one of claims 1 to 25.

51. A computer-readable storage medium, storing computer programs thereon, wherein the computer programs, when executed by a processor, cause the processor to perform the information reporting method of any one of claims 26 to 46.

52. An information reporting device, comprising:
a processor; and
a memory storing instructions executable by the processor;
wherein the instructions, when executed by the processor, cause the processor to perform the information reporting method of any one of claims 1 to 25.

53. An information reporting device, comprising:
a processor; and
a memory storing instructions executable by the processor;
wherein the instructions, when executed by the processor, cause the processor to perform the information reporting method of any one of claims 26 to 46.
